# EUROPÄISCHE PATENTSCHRIFT

(11) **EP 2 655 119 B1**
(45) Veröffentlichungstag und Bekanntmachung des Hinweises auf die Patenterteilung: **12.10.2016**
(21) Anmeldenummer: 11805400.6
(22) Anmeldetag: 01.12.2011
(51) Int. Cl.: B60K 35/00, B60K 37/06

(54) **ANZEIGEVORRICHTUNG FÜR EIN KRAFTFAHRZEUG**
DISPLAY DEVICE FOR A MOTOR VEHICLE
DISPOSITIF D'AFFICHAGE CONÇU POUR UN VÉHICULE AUTOMOBILE

(30) Priorität: 23.12.2010 DE 102010056411
(43) Veröffentlichungstag der Anmeldung: 30.10.2013
(73) Patentinhaber: Volkswagen Aktiengesellschaft, 38436 Wolfsburg (DE)
(72) Erfinder: OEL, Peter, 38165 Lehre (DE); WITTKÄMPER, Michael, 38102 Braunschweig (DE); ABLAßMEIER, Markus, 84061 Ergoldsbach (DE); MISCHKE, Michael, 30167 Hannover (DE); JOACHIM, Manuel, 30163 Hannover (DE); HORNA, Günter, 85049 Ingolstadt (DE); BOHRER, Lorenz, 10623 Berlin (DE)
(86) Internationale Anmeldenummer: PCT/EP2011/006016
(87) Internationale Veröffentlichungsnummer: WO 2012/084123

(56) Entgegenhaltungen:
- EP-A1- 2 018 992
- EP-A1- 2 181 881
- DE-A1- 10 349 673
- DE-A1- 19 708 610
- DE-A1-102007 057 725
- DE-A1-102008 048 825
- DE-A1-102009 011 075

## Beschreibung

Die Erfindung betrifft eine Anzeigevorrichtung für ein Kraftfahrzeug zur Realisierung der Darstellung von Komfortinformationen, insbesondere auf Fahrerassistenzsysteme bezogene Informationen, gemäß dem Oberbegriff des Anspruchs 1.

Zur Anzeige relevanter Informationen für den Fahrer eines Kraftfahrzeugs werden verschiedene Anzeigeinstrumente im Fahrzeug mit unterschiedlicher Anordnung verwendet. Zur Vermittlung zwingend notwendiger Informationen dient üblicherweise ein im direkten Sichtfeld des Fahrers angeordnetes Kombiinstrument mit dessen Hilfe Anzeigeinhalte über Rundinstrumente und ein zwischen den Rundinstrumenten angeordnetes Anzeigefeld vermittelt werden. Dabei kann das Kombiinstrument mittels eines einzigen Displays realisiert werden, indem die beiden Rundinstrumente digital realisiert werden. Es ist auch möglich analoge Rundinstrumente zu verwenden, zwischen denen ein Display zur Realisierung des Anzeigefeldes angeordnet ist.

Des Weiteren werden sogenannte Komfortinformationen wie Navigationsinformationen einschließlich einer digitalen Karte und Informationen über örtliche Begebenheiten, Telefoninformationen, Audio- und gegebenenfalls Videoinformationen, Informationen weiterer aktiver Fahrerassistenzsysteme (FAS = Fahrerassistenzsystem) und deren FAS-Zustände und Status über ein sogenanntes Infotainmentsystem angezeigt, welches üblicherweise in der Fahrzeugmittelkonsole angeordnet ist und auch als Mitteldisplay bezeichnet wird.

Die Druckschrift DE 10 2006 011 481 A1 zeigt eine Anzeigevorrichtung zum Unterstützen des Fahrers eines Kraftfahrzeugs, bei der Fahrzeugumfeldinformationen sowie eine daraus abgeleitete Fahrzeuggefährdungsinformation auf einer Ausgabeeinrichtung dargestellt werden. Dabei kann die Ausgabeeinrichtung einen Bildschirm und eine unterhalb der Scheibenwurzel angeordnete Leuchtmittelkette aufweisen, wobei auf dem Bildschirm die durch die Frontscheibe zu erblickende Fahrbahn perspektivisch dargestellt werden kann, während auf der Leuchtmittelkette die aktuelle Gefährdungssituation dargestellt wird. Nachteilig bei der bekannten Anzeigevorrichtung ist die beschränkte Einsatz- und Darstellungsmöglichkeit der Leuchtmittelkette sowie das unflexible Zusammenwirken zwischen Bildschirm und Leuchtmittelkette.

Die Druckschrift DE 197 08 610 A1 beschreibt eine Anzeigevorrichtung mit einer ersten und einer zweiten Anzeigeeinheit gemäß dem Oberbegriff des Anspruchs 1.

Die Druckschrift DE 10 2009 011 075 A1 beschreibt eine Instrumentenanzeige für einen Kraftfahrzeuginnenraum eines Kraftfahrzeugs, welche eine in einer Armaturentafel benachbart zu einem Lenkrad positionierbare Anzeigeeinheit zur Darstellung von Kraftfahrzeugparametern auf weist. Dabei ist mindestens eine Zusatzanzeige zur Darstellung von Informationen vorgesehen, wobei die Zusatzanzeige unter einem Winkel und/oder beabstandet zur Anzeigeeinheit angeordnet ist.

Die Druckschrift EP 2 181 881 A1 offenbart eine Anzeigevorrichtung mit einem in der Mittenkonsole angeordneten Steuerbildschirm und einem größeren in der Umgebung der Scheibenwurzel Anzeigebildschirm. Dabei ist der Steuerbildschirm als Touch-Screen ausgebildet und die Steuerung der Anzeige auf dem Anzeigebildschirm erfolgt durch eine Bedienung des Steuerbildschirms mittels Berühren.

Die Druckschrift DE 10 2007 057 725 A1 betrifft eine Signalisierungseinrichtung zur Anzeige von Warnhinweisen und/oder Informationshinweisen in einem Kraftfahrzeug mit einer optischen Anzeigeeinrichtung. Dabei erstreckt sich die Anzeigeeinrichtung entlang eines unteren und/oder oberen, in etwa horizontalen Randes einer Windschutzscheibe des Kraftfahrzeuges, wobei die Signalisierungseinrichtung derart ausgebildet ist, dass diese den Fahrer des Kraftfahrzeugs durch ein auf der Anzeigeeinrichtung erzeugtes Lichtsignal auf die Richtung des auftretenden Ereignisses hinweist.

Die Druckschrift EP 2 018 992 A1 betrifft ein Kraftfahrzeugcockpit mit einer Mehrzahl Anzeigeeinheiten zur Darstellung von Informationen, wobei die Anzeigeeinheiten an unterschiedlichen Positionen im Innenraum des Kraftfahrzeugs angeordnet sind. Durch eine Steueranordnung sind die Art und der Inhalt der jeweils an einer Anzeigeinheit dargestellten Information steuerbar. Von einem Aufnahmemittel ist eine Zuordnung eines Fingers eines Benutzers zu einer ersten Anzeigeeinheit sowie eine gestikabhängige Veränderung der Zuordnung zu einer weiteren Anzeigeeinheit berührungslos erfassbar und die Information der Änderung der Zuordnung der Steueranordnung zuleitbar und von der Steueranordnung entsprechend der Änderung der Zuordnung die weitere Anzeigeeinheit zur Darstellung der Information der ersten Anzeigeeinheit ansteuerbar. Dabei ist die erste Anzeigeeinheit in der Mittenkonsole angeordnet und die zweite Anzeigeeinheit entspricht dem Kombiinstrument hinter dem Lenkrad. Durch eine entsprechende berührungslose Gestik kann auf der ersten Anzeigeeinheit dargestellt Information auf eine Head-Up-Anzeige übertragen werden.

Die Druckschrift DE 103 49 673 A1 offenbart eine Vorrichtung zur Dateneingabe in einem Kraftfahrzeug, mit einem Eingabegerät zur manuellen Eingabe von Daten zur Steuerung von Fahrzeugfunktionen und/oder Zusatzgeräten und mit einem damit in Verbindung stehenden Head-Up-Display (HUD) zur Anzeige der eingegebenen Daten im Sichtfeld des Fahrers, ist das Eingabegerät mit einem berührungssensitiven Eingabefeld (Touch-Panel) zur handschriftlichen Eingabe von Daten versehen und weist ein Schrifterkennungssystem zur Auswertung der eingegebenen Daten auf, und das HUD ist in einem Textmodus zur Anzeige der ausgewerteten Daten in Druckschrift betreibbar.

Die Druckschrift DE 10 2008 048 825 A1 betrifft eine Anzeige-und Bediensystem mit einer nutzerbeeinflussbaren Darstellung von Anzeigeobjekten. Dabei ist vorgesehen, das Anzeige-und Bediensystem, welches eine Anzeigevorrichtung mit einer Anzeigefläche, eine Erfassungsvorrichtung, mit der Nutzereingaben erfassbar sind, und eine Steuereinrichtung umfasst, die eine grafische Darstellung der Anzeigeobjekte auf der Anzeigevorrichtung steuert, so auszugestalten, dass über eine Nutzereingabe ein Modifizierungsmodus aktivierbar ist, in dem eine grafische Darstellung aller Anzeigeobjekte zumindest teilweise in einem Teilbereich der Anzeigefläche erfolgt.

Der Erfindung liegt daher die Aufgabe zugrunde, eine Anzeigevorrichtung der gattungsgemäßen Art zu verbessern, so dass die Darstellung der Informationen flexibler ist und eine einfache Handhabung der Anzeigevorrichtung möglich ist.

Diese Aufgabe wird durch eine Anzeigevorrichtung mit den Merkmalen des Anspruchs 1. Bevorzugte Ausgestaltungen der Erfindung sind Gegenstand der Unteransprüche.

Die erfindungsgemäße Anzeigevorrichtung für ein Kraftfahrzeug umfasst eine erste und eine zweite Anzeigeeinheit zur Darstellung von Informationen, insbesondere auf Fahrerassistenzsysteme bezogene Informationen, wobei
- die erste Anzeigeeinheit in Form eines langgestreckten graphikfähigen Farb-Displays in der Umgebung der Scheibenwurzel der Frontscheibe angeordnet ist,
- die zweite Anzeigeeinheit ein im Fahrzeug, insbesondere in der Mittelkonsole des Fahrzeugs, angeordnetes weiteres Display ist,
- die Anzeigeeinrichtung ein mobiles Display als dritte Anzeigeeinheit aufweist, wobei
- die Bedienung der ersten Anzeigeeinheit sowie die Interaktion zwischen erster und zweiter Anzeigeeinheit und die Interaktion zwischen erster und dritter Anzeigeeinheit über eine ortsbezogene berührungslose Gestik erfolgt.

Durch die Anordnung der ersten Anzeigeeinheit in der Umgebung der Scheibenwurzel wird der Blick des Fahrers in Vorwärtsrichtung durch die Frontscheibe nicht behindert oder abgelenkt, wie dies bei einem Head-Up-Display der Fall ist, sondern die Information befindet sich im unteren Blickfeldrand des Fahrers oder auch des Beifahrers, wodurch die Information ohne direkte Störung des Blickfeldes einfach wahrgenommen werden kann. Neben der ersten und zweiten Anzeigeeinheit kann die Anzeigevorrichtung weitere Anzeigeeinheiten, beispielsweise Anzeigeeinheiten von Mobilgeräten, aufweisen.

Vorzugsweise weist die erste Anzeigeeinheit eine Höhe von 4 cm bis 6 cm auf. Diese Höhe ist ausreichend, um Informationen in vernünftiger Weise in ausreichend deutlicher Darstellung an den Fahrer übermitteln zu könne, ohne dass die erste Anzeigeeinheit den Blick des Fahrers von der vor ihm liegenden Fahrbahn behindern würde. Da die erste Anzeigeneinheit sich entlang der gesamten Scheibenwurzel der Frontscheibe erstreckt, können auch positionsbezogene Informationen in perspektivischer Weise angezeigt werden.

Weiter bevorzugt kann die erste Anzeigeeinheit ein auf dem unteren Frontscheibenrand, mit anderen Worten oberhalb der Scheibenwurzel, aufgebrachtes transparentes Display sein. Dies kann vorteilhaft sein, wenn im unteren Scheibenwurzelbereich des Armaturenbretts der Platz nicht ausreicht, die Anmutung ungünstig ist oder die Frontscheibe weit nach unten reicht.

In einer weiteren bevorzugten Ausführungsform kann die erste Anzeigeeinheit direkt an der Scheibenwurzel oder entlang einer geschwungenen, in dem Armaturenbrett ausgebildeten Zierkante (sogenannte Wrap-Around-Kante oder -Linie), die sich im Wesentlichen von der linken Fahrzeugtür über das Armaturenbrett bis zur rechten Fahrzeugtür erstreckt, angeordnet sein. In diesem Fall kann die erste Anzeigeeinheit aus einem einzigen Display oder aus einer nebeneinander Anordnung mehrerer Displays sein, wobei in diesem Fall die Übergänge zwischen den einzelnen Displayelementen geeignet kaschiert ist.

Vorzugsweise kann die erste Anzeigeeinheit bis in die seitlichen Vordertüren des Kraftfahrzeugs reichen, wodurch die Anmutung der ersten Anzeigeeinheit weiter verstärkt und der Anzeigebereich vergrößert wird.

Ferner kann die erste Anzeigeeinheit eine LED-Leiste an jeder Seite der Frontscheibe aufweisen. Auf diese Weise kann eine auf dem Scheibenwurzeldisplay nicht darstellbare Höheninformation angezeigt werden.

Eine minimale Bedienung der ersten Anzeigeeinheit sowie die Interaktion zwischen erster und zweiter Anzeigeeinheit erfolgt über eine ortsbezogene Gestik. Da eine direkte Interaktion mittels Berührung der ersten Anzeigeeinheit aufgrund der Position des Fahrers nicht möglich ist, erfolgt daher eine Bedienung mittels Gestik, mit anderen Worten: Ziehen der Information von einer Anzeigeinheit auf die andere, horizontale und vertikale Wischgesten und Greifen und Hinwerfen. Eine derartige Gestikbedienung kann beispielsweise durch eine kapazitive Sensorik und/oder durch ein Finger-Tracking-System realisiert werden.

Bei dem erfindungsgemäßen Verfahren zur Darstellung von Information auf einer im Vorangegangenen beschriebenen Anzeigevorrichtung werden die Anzeigeinhalte der ersten Anzeigeeinheit, d.h. des Scheibenwurzeldisplays, in eine vorgegebene Anzahl von Gruppen klassifiziert. Vorzugsweise werden bei einer Klassifizierung in drei Gruppen folgende Gruppen dargestellt:
- augmentierte Informationen,
- Infotainment-Inhalte und
- Ambiente-Inhalte.

Dabei leiten sich augmentierte Informationen von dem Begriff "Augmented Reality" ab, mit anderen Worten, die darzustellende Information wird mit den Objekten der Umwelt in Einklang gebracht. Infotainment-Inhalte sind Informationen von Infotainmenteinheiten, und Ambiente-Inhalte betreffen das Ambiente des Innenraums des Fahrzeugs.

Bevorzugte Ausführungsformen der Erfindung werden nachfolgend anhand der Zeichnungen näher erläutert, wobei im Folgenden die erste Anzeigeeinheit als Scheibenwurzeldisplay oder Wrap-Around-Display (an der Wrap-Around-Kante angeordnetes Display) und die zweite Anzeigeeinheit als Mittendisplay bezeichnet wird, um einen direkten Bezug zur Anordnung der Anzeigeeinheiten in der konkreten Ausführungsform herzustellen. Dabei zeigen
- Fig. 1: eine erste Ausführungsform der erfindungsgemäßen Anzeigevorrichtung,
- Fig. 2: eine zweite Ausführungsform der erfindungsgemäßen Anzeigevorrichtung,
- Fig. 3: ein erstes Beispiel ortsbezogener Einblendungen in das Scheibenwurzeldisplay,
- Fig. 4: ein zweites Beispiel ortsbezogener Einblendungen in das Scheibenwurzeldisplay,
- Fig. 5: ein drittes Beispiel ortsbezogener Einblendungen in das Scheibenwurzeldisplay,
- Fig. 6: ein viertes Beispiel ortsbezogener Einblendungen in das Scheibenwurzeldisplay,
- Fig.7: ein erstes Beispiel einer Interaktion mit einem Anzeigeinhalt des Scheibenwurzeldisplays,
- Fig.8: ein zweites Beispiel einer Interaktion mit einem Anzeigeinhalt des Scheibenwurzeldisplays,
- Fig. 9: ein drittes Beispiel einer Interaktion mit einem Anzeigeinhalt des Scheibenwurzeldisplays und
- Fig. 10: das Scheibenwurzeldisplay als Ambient-Anzeige.

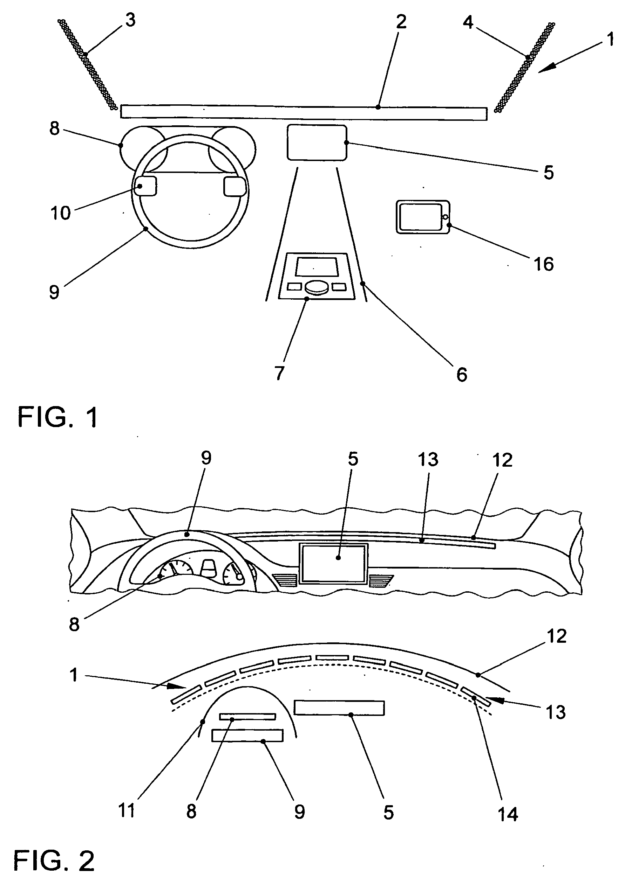

Fig. 1 zeigt in schematischer Darstellung eine erste Ausführungsform der erfindungsgemäßen Anzeigevorrichtung 1, umfassend ein Scheibenwurzeldisplay 2, welches am unteren Rand der Frontscheibe (nicht dargestellt) angeordnet ist, eine linke und eine rechte LED-Leiste 3, 4 sowie ein Mittendisplay 5, welches in der Mittelkonsole 6 angeordnet ist. Dabei sind die LED-Leisten 3, 4 optional. Ferner ist in der Mittelkonsole 6 das Infotainmentsystem 7 mit Bedienelementen und gegebenenfalls weiteren Anzeigeelementen angeordnet. Des Weiteren befindet sich im Sichtbereich des Fahrers das Kombiinstrument 8 sowie das Lenkrad 9 mit weiteren Bedienelementen 10. Das Scheibenwurzeldisplay 2 kann als schmales Farbdisplay direkt unterhalb der Scheibenwurzel angeordnet sein, es ist auch möglich, dass das Scheibenwurzeldisplay 2 als transparentes Display auf dem unteren Rand der Frontscheibe aufgebracht ist, beispielsweise in Form eines OLED-Displays. Ferner ist ein weiteres mobiles Display 16 als weitere Anzeigeeinheit dargestellt.

Fig. 2 zeigt in schematischer Darstellung eine zweite Ausführungsform, wobei der obere Teil der Fig. 2 eine perspektivische Ansicht der Umgebung der Scheibenwurzel 12 eines Fahrzeugs und der untere Teil eine schematische Draufsicht auf die in der Umgebung der Scheibenwurzel angeordnete Anzeigevorrichtung 1 zeigen. Hier umfasst die Anzeigevorrichtung 1 ein unterhalb der Scheibenwurzel 12 in einer Wrap-Around-Kante des Armaturenbrettes angeordnetes Wrap-Around-Display 13 sowie ein Mittendisplay 5. Dabei kann das Wrap-Around-Display 13 aus einer Vielzahl aneinander angeordneter Displayelemente 14 bestehen, wobei die separaten Displayelemente möglichst nahtlos zusammengesetzt werden, und die Übergänge möglichst so kaschiert sind, dass sie nicht auffallen. Das Wrap-Around-Display 13 bzw. die einzelnen Displayelemente 14 haben eine Höhe von ca. 4 bis 6 cm. Ferner ist ein Kombiinstrument 8 unterhalb einer Hutze 11 hinter dem Lenkrad 9 des Fahrzeugs angeordnet.

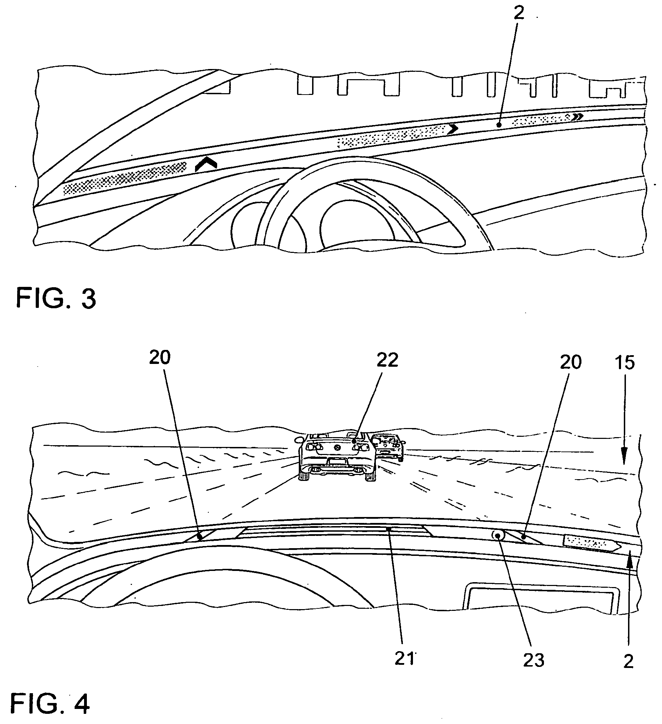

In den Figuren 3 bis 7 werden Beispiele für die Darstellung sogenannter augmentierter Informationen im Scheibenwurzeldisplay, also in der ersten Anzeigeeinheit, angegebenen, wobei sich dieser Begriff aus "Augmented Reality" ableitet. Darunter wird unter anderem die Darstellung von Informationen im realen Kontext verstanden, also beispielsweise fahrzeugrelevante Information anhand eines Fahrzeugmodells oder umgebungsbezogene Informationen in einem Kamerabild der Realität.

So werden die Informationen in der Darstellung augmentierter Informationen mit den Objekten der Umgebung in Einklang gebracht. Die sogenannte ortskodierte Darstellung ermöglicht es dem Fahrer Informationen sehr schnell wahrzunehmen. Durch die örtliche Analogie ist hier nur sehr geringes Transferdenken notwendig. Somit können sowohl der Fahrer optimal bei seiner Fahraufgabe unterstützt als auch die erforderliche Denkleistung auf einem geringen Maß gehalten werden.

So zeigt Fig. 3 die Einblendung ortsbezogener Informationen in das Scheibenwurzeldisplay 2, hier als Beispiel einer ortsbezogenen Einblendung die Einblendung touristischer Informationen, beispielsweise:
- Touristische POI (Points of Interest),
- Navigationsziele und Wegpunkte (Landmarks/Zwischenziele/Abbiegepunkte),
- Parkplätze und/oder
- Car2X-Infos (z.B. Warnung vor Ereignissen und Hindernissen).

Fig. 4 zeigt die ortsbezogene Einblendung von Navigations- und ECO-Anweisungen im Scheibenwurzeldisplay 2, zusammen mit dem Blick des Fahrers durch die Frontscheibe 15 auf das vor dem Egofahrzeug sich abspielende Verkehrsgeschehen. Dargestellt sind hier Einblendungen der Fahrbahnmarkierungen 20, einer Abstandssymbolik 21 für den Abstand zu einem vorausfahrenden Fahrzeug 22, eine Spurwechselempfehlung 23, da auf der rechten Spur mehr Platz ist, und einen Abbiegehinweis 24. Mit anderen Worten, die ortsbezogenen Einblendungen umfassen in nicht abschließender Aufzählung:
- Turn-by-Turn Navi als Follow Me,
- Spurwechsel- und Abbiegeempfehlungen (inkl. Countdown), und
- Streckenvorausschau.

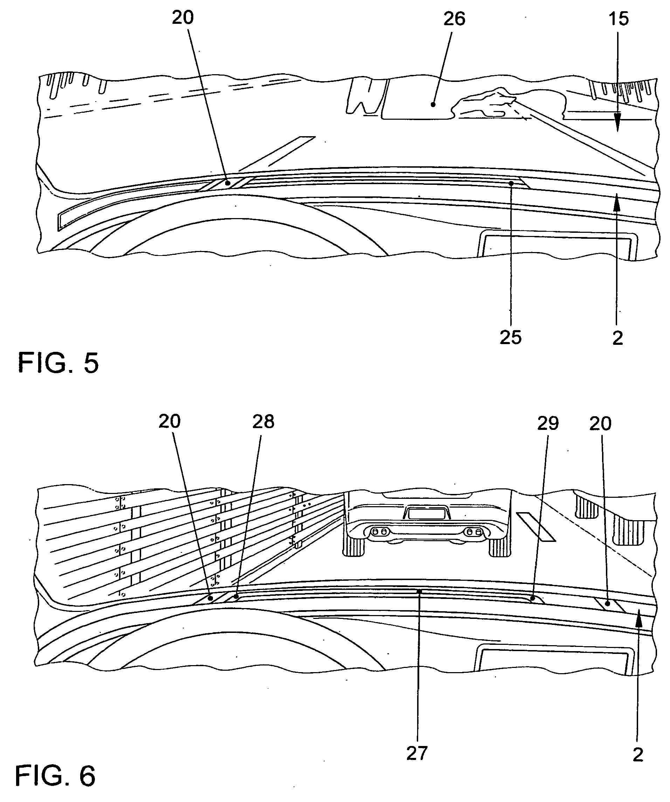

Fig. 5 zeigt ein Beispiel einer oben genannten Streckenvorausschau durch die Darstellung des vor dem Egofahrzeug sich abspielenden Verkehrszustands. Dargestellt ist ein durch die Frontscheibe 15 sichtbares, vor dem Egofahrzeug befindliches Hindernis 26, welches im Scheibenwurzeldisplay 2 seitens des entsprechenden Fahrerassistenzsystems durch ein Warnsymbol 25 symbolisiert wird und den Fahrer auf eine unmittelbare Gefahr und eine gegebenenfalls einsetzende Notreaktion des Fahrerassistenzsystems hinweist. Ferner wird noch eine Fahrbahnmarkierung 20 im Scheibenwurzeldisplay 2 dargestellt.

Weitere ortsbezogene Informationen betreffen Statusinformationen und Hinweise der Fahrerassistenzsysteme, wie beispielsweise
- Side und Lane Assist-Warnung, ACC - Informationen,
- Baustellen- /Engstellen-Assistent,
- Einparkhilfe, Darstellung von Eigen- und Fremdfahrzeuggrenzen sowie von Hindernissen,
- Optimallinie (Sport),

wie dies in Fig. 6 dargestellt ist, die eine ortsbezogene Einblendung der Statusinformationen, also der Status, der Fahrerassistenzsysteme sowie Hinweise der Fahrerassistenzsysteme zeigt. Entsprechend der vor dem Fahrzeug befindlichen Verkehrssituation, nämlich dem Fahren auf der schmalen linken Spur innerhalb einer zweispurigen Baustelle, wird in dem Scheibenwurzeldisplay 2 die Fahrbahnmarkierungen 20 vorzugsweise in gelber Farbe dargestellt. Ferner wird im Display 2 ein Begrenzungssymbol 27 eingeblendet, welches in schematischer Darstellung die Begrenzungen des Egofahrzeugs innerhalb der Fahrbahnmarkierung 20 visualisiert. Dabei verdeutlicht der linke Rand 28 des Begrenzungssymbols 27 die linke Fahrzeugseite und der rechte Rand 29 die rechte Fahrzeugseite. Ferner können linker und rechter Rand 28, 29 in unterschiedlichen Farben ausgestaltet sein, um so den Fahrer auf weitere Gefahren hinzuweisen. So ist in Fig. 6 das Egofahrzeug zu nahe an der inneren Leitplanke der Baustellt, was durch eine Darstellung des linken Rands 28 in roter Signalfarbe ausgedrückt werden kann, wohingegen das Symbol 29 für den rechten Fahrzeugrand in grüner Farbe gehalten sein kann, da der Abstand der rechten Fahrzeugseite zur rechten Markierung in einem akzeptablen Bereich befindet.

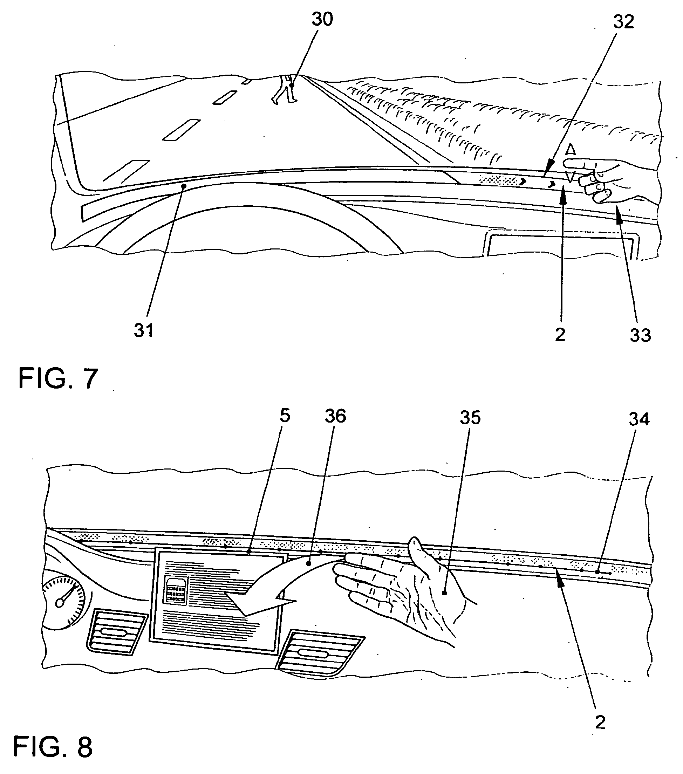

Fig. 7 zeigt eine Warnung vor einem vor dem Egofahrzeug auftauchenden Fußgänger 30 durch ein vorzugsweise in Signalrot gehaltenen Warnhinweis 31 im Display 2 im Blickfeld des Fahrers.

Die Figuren 7 bis 9 zeigen die Darstellung von Infotainment-Inhalten, sowie deren Bedienung. Dabei sind folgende Inhalte denkbar, wobei die Aufzählung nicht abschließend zu verstehen ist:
- Statusinformationen (z.B. Medien "aktueller Titel") und
- Anzeige von Smartphone-Applikationen für den Beifahrer, z.B. RSS-Feeds, Medienalbum, Fotoalbum etc.,
wobei zur Bedienung eine minimale Interaktion bereitgestellt wird.

So zeigt Fig. 7 im rechten Bereich des Displays 2 die Anzeige und Minimal-Interaktion mit einem Medienplayer 32 per Wischgeste 33, dargestellt durch die Darstellung einer Hand mit ausgestrecktem Zeigefinger. Mittels dieser Wischgeste 33 wird eine Skip-Funktion ausgelöst, die den Interpret, das Album, den Titel oder den Sender wechselt.

Die Fig. 8 zeigt die Anzeige und Minimal-Interaktion mit im Display dargestellter Routeninformation 34 mit Stationsinfos der dargestellten Route von Potsdam nach Amsterdam. Per Wischgeste 35 können Zusatzinformationen zu Wegpunkten auf das Mittendisplay 5 übertragen und dort ausführlich dargestellt werden, was durch die schematisch dargestellte Übertragungsrichtung 36 symbolisiert ist. Es ist auch möglich anstelle des Mittendisplays ein alternatives Display, beispielsweise ein weiteres Infotainment-Display oder ein Mobilgerät eines Mitfahrers, zu verwenden.

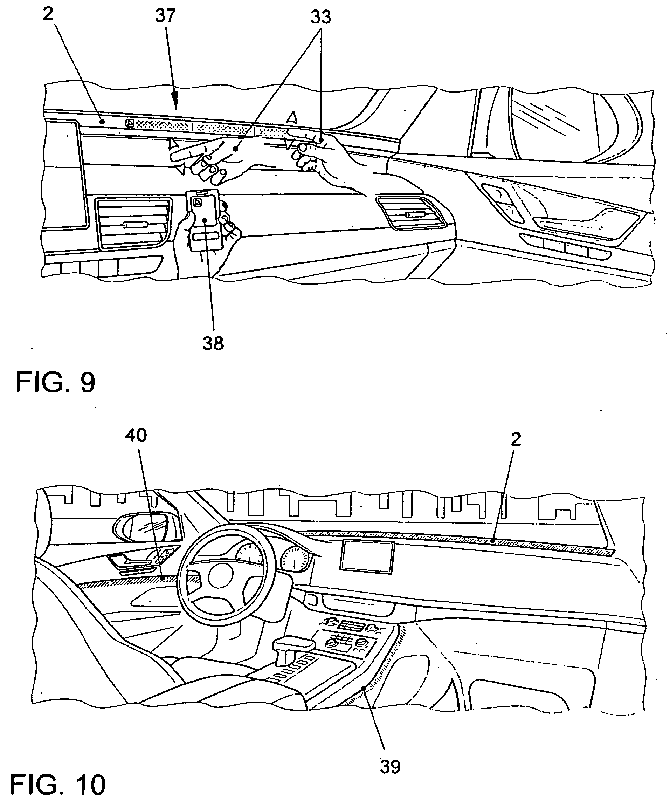

Fig. 9 zeigt in symbolischer Weise die Anzeige und Minimal-Interaktion mit in dem Scheibenwurzeldisplay 2 dargestellten Informationsangeboten 37, die beispielsweise in der Form von Apps angeboten werden (Apps: Applications, mittlerweile Anwendung für Mobilgeräte). Dabei sind hier Apps Eingangskanäle für Informationen, insbesondere Umgebungsinformationen, und können per Wischgeste 33 als Inhalte auf ein alternatives Display, hier ein Mobilgerät 38 eines Beifahrers, übertragen und lösen im Mobilgerät 38 die entsprechende Anwendung aus.

In der Gruppe der Ambient-Anzeigen wird ein Luxus-Feeling, Wurzelholz-Anmutung, eine Reaktion auf Fahrsituation und/oder eine Reaktion auf Insassenbewegungen ermöglicht.

So zeigt Fig. 10 einen inszenierten Einstiegsvorgang in ein Fahrzeug durch ein Anpassen der farblichen Darstellung des Scheibenwurzeldisplays 2 an die innere Beleuchtung des Fahrzeugs beim Einsteigen, wodurch die Anmutung des Innerraums verstärkt wird, um ein "luxuriöses" Gefühl beim Einsteigen des Fahrers oder der Passagiere zu bewirken. Dies kann im vorliegenden Beispiel durch eine Darstellung des Innenraums des Fahrzeugs verwendeten Rot-Tons im Scheibenwurzeldisplay 2 erreicht werden, der sich an der Mittenkonsole in Form einer Lichtleiste 39 und an der Fahrertür in Form einer weiteren Lichtleiste 40 fortsetzt.

### Bezugszeichenliste

- 1: Anzeigevorrichtung
- 2: Scheibenwurzeldisplay
- 3: LED-Leiste
- 4: LED-Leiste
- 5: Mlttendisplay
- 6: Mittelkonsole
- 7: Infotainmentsystem
- 8: Kombiinstrument
- 9: Lenkrad
- 10: Bedienelement
- 11: Hutze
- 12: Scheibenwurzel
- 13: Wrap-Around-Display
- 14: Displayelement
- 15: Frontscheibe
- 16: Mobildisplay

- 20: Fahrbahnmarkierung
- 21: Abstandssymbolik
- 22: vorderes Fahrzeug
- 23: Spurwechselempfehlung
- 24: Abbiegehinweis
- 25: Warnsymbol
- 26: Objekt
- 27: Begrenzungssymbol
- 28: linker Rand
- 29: rechter Rand
- 30: Fußgänger
- 31: Warnhinweis
- 32: Medienplayer
- 33: Wischgeste
- 34: Routeninformation
- 35: Wischgeste
- 36: Übertragungsrichtung
- 37: Informationsangebote
- 38: Mobilgerät
- 39: Lichtleiste
- 40: Türlichtleiste

## Patentansprüche

1. Anzeigevorrichtung (1) für ein Kraftfahrzeug mit einer ersten und einer zweiten Anzeigeeinheit (2, 5) zur Darstellung von Informationen, insbesondere auf Fahrerassistenzsysteme bezogene Informationen, wobei die erste Anzeigeeinheit (2, 13) in Form eines langgestreckten graphikfähigen Farb-Displays in der Umgebung der Scheibenwurzel der Frontscheibe angeordnet ist, und die zweite Anzeigeeinheit (3) ein im Fahrzeug, insbesondere in der Mittelkonsole des Fahrzeugs, angeordnetes weiteres Display ist,
**dadurch gekennzeichnet, dass**
die Anzeigeeinrichtung ein mobiles Display (16, 38) als dritte Anzeigeeinheit aufweist, wobei
die Bedienung der ersten Anzeigeeinheit (2, 13) sowie die Interaktion zwischen erster und zweiter Anzeigeeinheit (2, 5) und die Interaktion zwischen erster und dritter Anzeigeeinheit (16, 38) über eine ortsbezogene berührungslose Gestik erfolgt.

2. Anzeigevorrichtung nach Anspruch 1, **dadurch gekennzeichnet, dass** die erste Anzeigeeinheit (2, 13) eine Höhe von 4 cm bis 6 cm aufweist.

3. Anzeigevorrichtung nach Anspruch 2, **dadurch gekennzeichnet, dass** die erste Anzeigeeinheit (2) ein auf dem unteren Frontscheibenrand aufgebrachtes transparentes Display ist.

4. Anzeigevorrichtung nach Anspruch 2, **dadurch gekennzeichnet, dass** die erste Anzeigeeinheit (2, 13) direkt in der Scheibenwurzel oder entlang einer geschwungenen Wrap-Around-Kante angeordnet ist.

5. Anzeigevorrichtung nach Anspruch 4, **dadurch gekennzeichnet, dass** die erste Anzeigeeinheit (2, 13) bis in die seitlichen Vordertüren des Kraftfahrzeugs reicht.

6. Anzeigevorrichtung nach einem der vorangegangenen Ansprüche, **dadurch gekennzeichnet, dass** die erste Anzeigeeinheit (2, 13) ferner eine LED-Leiste(3, 4) an jeder Seite der Frontscheibe aufweist.

7. Anzeigevorrichtung nach einem der vorangegangenen Ansprüche, **dadurch gekennzeichnet, dass** die Gestikbedienung durch eine kapazitive Sensorik und/oder durch ein Finger-Tracking-System realisiert wird.

8. Anzeigevorrichtung nach einem der vorangegangenen Ansprüche, **dadurch gekennzeichnet, dass** die Anzeigevorrichtung eine Klassifizierungseinrichtung aufweist, welche die Anzeigeinhalte der ersten Anzeigeeinheit (2, 13) in eine vorgegebene Anzahl von Gruppen klassifiziert.

9. Anzeigevorrichtung nach Anspruch 8, **dadurch gekennzeichnet, dass** bei einer Klassifizierung in drei Gruppen durch die Klassifizierungseinrichtung folgende Gruppen dargestellt werden:
augmentierte Informationen,
Infotainment-Inhalte, und
Ambiente-Inhalte.

## Claims

1. Display apparatus (1) for a motor vehicle having a first and a second display unit (2, 5) for presenting information, particularly information relating to driver assistance systems, wherein
the first display unit (2, 13) is arranged in the form of an elongate graphics-compatible colour display in the surroundings of the window root of the windscreen, and
the second display unit (3) is a further display arranged in the vehicle, particularly in the central console of the vehicle,
**characterized in that**
the display device has a mobile display (16, 38) as a third display unit, wherein
the operator control of the first display unit (2, 13) and also the interaction between the first and second display unit (2, 5) and the interaction between the first and third display unit (16, 38) are effected by means of a location-related contactless gesticulation.

2. Display apparatus according to Claim 1, **characterized in that** the first display unit (2, 13) has a height of from 4 cm to 6 cm.

3. Display apparatus according to Claim 2, **characterized in that** the first display unit (2) is a transparent display applied to the lower windscreen margin.

4. Display apparatus according to Claim 2, **characterized in that** the first display unit (2, 13) is arranged directly in the window root or along a curved wraparound edge.

5. Display apparatus according to Claim 4, **characterized in that** the first display unit (2, 13) extends into the front side doors of the motor vehicle.

6. Display apparatus according to one of the preceding claims, **characterized in that** the first display unit (2, 13) further has an LED strip (3, 4) on each side of the windscreen.

7. Display apparatus according to one of the preceding claims, **characterized in that** the gesticulatory operator control is implemented by a capacitive sensor system and/or by a finger tracking system.

8. Display apparatus according to one of the preceding claims, **characterized in that** the display apparatus has a classification device that classifies the display content of the first display unit (2, 13) into a prescribed number of groups.

9. Display apparatus according to Claim 8, **characterized in that** a classification into three groups by the classification device prompts the following groups to be presented:
augmented information,
infotainment content and
ambient content.

## Revendications

1. Dispositif d'affichage (1) pour véhicule automobile comportant des première et deuxième unités d'affichage (2, 5) destinées à représenter des informations, notamment des informations concernant des systèmes d'assistance à la conduite, dans lequel la première unité d'affichage (2, 13) se présente sous la forme d'un afficheur couleur allongé à fonctionnalités graphiques qui est à proximité de la base du pare-brise, et
la deuxième unité d'affichage (3) est un autre afficheur disposé dans le véhicule, notamment dans la console centrale du véhicule,
**caractérisé en ce que** le dispositif d'affichage comprend un afficheur mobile (16, 38) en tant que troisième unité d'affichage, dans lequel l'utilisation de la première unité d'affichage (2, 13) ainsi que l'interaction entre les première et deuxième unités d'affichage (2, 5) et l'interaction entre les première et troisième unités d'affichage (16, 38) s'effectuent par l'intermédiaire d'un geste sans contact dépendant de la position.

2. Dispositif d'affichage selon la revendication 1, **caractérisé en ce que** la première unité d'affichage (2, 13) présente une hauteur de 4 cm à 6 cm.

3. Dispositif d'affichage selon la revendication 2, **caractérisé en ce que** la première unité d'affichage (2) est un afficheur transparent monté sur la périphérie inférieure du pare-brise.

4. Dispositif d'affichage selon la revendication 2, **caractérisé en ce que** la première unité d'affichage (2, 13) est directement disposée dans la base du pare-brise ou le long d'un bord rabattu incurvé.

5. Dispositif d'affichage selon la revendication 4, **caractérisé en ce que** la première unité d'affichage (2, 13) s'étend jusque dans les portes avant latérales du véhicule automobile.

6. Dispositif d'affichage selon l'une quelconque des revendications précédentes, **caractérisé en ce que** la première unité d'affichage (2, 13) comprend en outre une barre de LED (3, 4) de chaque côté du pare-brise.

7. Dispositif d'affichage selon l'une quelconque des revendications précédentes, **caractérisé en ce que** la commande par geste est réalisée au moyen de capteurs capacitifs et/ou au moyen d'un système de poursuite des doigts.

8. Dispositif d'affichage selon l'une quelconque des revendications précédentes, **caractérisé en ce que** le dispositif d'affichage comporte un dispositif de classification qui classe les contenus d'affichage de la première unité d'affichage (2, 13) dans un nombre prédéterminé de groupes.

9. Dispositif d'affichage selon la revendication 8, **caractérisé en ce que**, lors d'une classification en trois groupes par le dispositif de classification, les groupes suivants sont représentés :
informations augmentées,
contenus d'info-divertissements, et
contenus ambiants.
